# EUROPEAN PATENT APPLICATION

(11) **EP 4 674 667 A1**
(43) Date of publication of application: **07.01.2026**
(21) Application number: 25186407.0
(22) Date of filing: 30.06.2025
(51) Int. Cl.: B60L 1/00, B60H 1/32, B60L 15/20, B60L 58/12

(54) **SYSTEM AND METHOD FOR POWER SUPPLY MANAGEMENT IN A VEHICLE WITH A TRANSPORT REFRIGERATION UNIT**

(30) Priority: 02.07.2024 US 202463666767 P
(71) Applicant: Carrier Corporation, Palm Beach Gardens, FL 33418 (US)
(72) Inventor: CHAROULET, Guillaume, 76520 Franqueville Saint Pierre (FR)
(74) Representative: Dehns

(57) **Abstract**

A system (100) for power supply management in a vehicle (102) is equipped with a transport refrigeration unit, TRU, (104). The system (100) comprises a controller (112) connected to the TRU (104). The controller (112) comprises a processor (204) with access to a memory (206) storing instructions executable by processors (204), which causes the controller (112) to adapt operation of one or more components (106) of the TRU (104) to adjust electrical power consumption of the TRU (104) to a determined power level, based on one or more of electrical attributes of electrical power supplied to battery (108), real-time electrical power consumption of TRU (104), and real-time state of charge, SOC, of battery (108).

## Description

### CROSS-REFERENCE TO RELATED APPLICATION

This patent application claims the benefit of U.S. Provisional Patent Application No. 63/666,767 filed on July 02, 2024, which is incorporated by reference herein in its entirety.

### BACKGROUND

The invention relates to transport refrigeration units and power supply management systems, and more particularly, to a system and a method for power supply management in a vehicle equipped with a transport refrigeration unit (TRU) and a battery to power the TRU.

### SUMMARY

According to a first aspect of the invention there is provided a system for power supply management in a vehicle equipped with a transport refrigeration unit (TRU) and a battery to power the TRU. The system comprises a controller connected a TRU, wherein the controller comprises a processor with access to a memory storing instructions executable by the processor, which causes the controller to adapt operation of one or more components of the TRU to adjust electrical power consumption of the TRU to a determined power level, based on one or more of electrical attributes of electrical power supplied to the battery, real-time electrical power consumption of the TRU, and real-time state of charge (SOC) of the battery.

Optionally, the battery is a traction battery associated with the vehicle.

Optionally, the controller is a control unit of the vehicle, wherein the control unit is in communication with a TRU controller.

Optionally, the controller is further configured to adjust cooling capacity of the TRU to adjust the electrical power consumption of the TRU.

Optionally, the controller is further configured to adapt the operation of one of a compressor, a fan, or a heater of the TRU to adjust the electrical power consumption of the TRU.

Optionally, the controller is further configured to monitor, using a first set of sensors, the real-time SOC of the battery or an amount of energy available in the battery, monitor, using a second set of sensors, the real-time electrical power consumption of the TRU during a trip of a predefined duration, and adapt the operation of the one or more components of the TRU based on the monitored real-time electrical power consumption of the TRU and the real-time SOC of the battery, to adjust the electrical power consumption of the TRU or electrical power allocated to the TRU to the determined power level or adjust cooling capacity of the TRU to a predefined capacity, and correspondingly maintain the SOC of the battery equal to or above a predefined SOC during the trip.

Optionally, the battery is configured to be connected to an external power source, wherein the controller is further configured to monitor, using a first set of sensors, the real-time SOC of the battery or an amount of energy available in the battery, monitor, using a second set of sensors, the real-time electrical power consumption of the TRU, monitor, using a third set of sensors, the electrical attributes of electrical power supplied by the power source to the battery during one or more charging modes, and adapt the operation of the one or more components of the TRU based on the monitored electrical attributes, the real-time electrical power consumption of the TRU, the real-time SOC of the battery, to adjust the electrical power consumption of the TRU to the determined power level or adjust cooling capacity of the TRU to a predefined capacity.

Optionally, the controller is in communication with one or more human-machine interface (HMI) devices associated with one or more users, wherein the controller is configured to display one or more of the real-time SOC of the battery, the real-time electrical power consumption or the cooling capacity of the TRU, the electrical attributes of electrical power supplied by the power source during the one or more charging modes, on the one or more HMI devices.

Optionally, the controller is further configured to enable the one or more users to adjust, using the one or more HMI devices, the cooling capacity of the TRU or the electrical power consumption of the TRU.

Optionally, upon detection of the real-time SOC of the battery to be below the predefined SOC, the controller is configured to generate and transmit an alert signal to the one or more HMI devices.

According to a second aspect of the invention there is provided a method for power supply management in a vehicle equipped with a TRU and a battery to power the TRU. The method comprises adapting, by a controller, operation of one or more components of the TRU for adjusting electrical power consumption of the TRU to a determined power level, based on one or more of electrical attributes of electrical power supplied to the battery, real-time electrical power consumption of the TRU, and real-time SOC of the battery.

Optionally, the method further comprises adjusting cooling capacity of the TRU to adjust the electrical power consumption of the TRU.

Optionally, the method further comprises adapting, by the controller, operation of one of a compressor, a fan, or a heater associated with the TRU for adjusting the electrical power consumption of the TRU.

Optionally, the method further comprises monitoring the real-time SOC of the battery or an amount of energy available in the battery, monitoring the real-time electrical power consumption of the TRU during a trip of a predefined duration, and adapting the operation of the one or more components of the TRU based on the monitored real-time electrical power consumption of the TRU and the real-time SOC of the battery, to adjust the electrical power consumption by the TRU to the determined power level or adjust cooling capacity of the TRU to a predefined capacity, and correspondingly maintain the SOC of the battery equal to or above a predefined SOC during the trip.

Optionally, the battery is configured to be connected to an external power source, wherein the method further comprises monitoring the real-time SOC of the battery or an amount of energy available in the battery, monitoring the real-time electrical power consumption of the TRU, monitoring the electrical attributes of electrical power supplied by the power source to the battery during one or more charging modes, and adapting the operation of the one or more components of the TRU based on the monitored electrical attributes, the real-time electrical power consumption of the TRU, the real-time SOC of the battery, to adjust electrical power consumption of the TRU or electrical power allocated to the TRU to the predefined power level or adjust cooling capacity of the TRU to a predefined capacity.

Optionally, the method further comprises displaying, on a HMI device associated with one or more users, one or more of the real-time SOC of the battery, the real-time electrical power consumption or the cooling capacity of the TRU, and the electrical attributes of electrical power supplied by the power source during the one or more charging modes.

Optionally, the method further comprises allowing, by the controller, the one or more users to adjust the cooling capacity of the TRU or the electrical power consumption of the TRU.

Optionally, the method further comprises generating and transmitting an alert signal to the HMI device when the real-time SOC of the battery goes below the predefined SOC.

Optionally, the controller is a control unit of the vehicle, wherein the control unit is in communication with a TRU controller.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the invention and are incorporated in and constitute a part of this specification. The drawings illustrate exemplary embodiments of the invention and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A illustrates an exemplary block diagram of a power management system for a vehicle equipped with a transport refrigeration unit (TRU).
FIG. 1B illustrates an exemplary representation of the power management system implemented in a vehicle having a traction battery and equipped with a TRU.
FIG. 2 illustrates an exemplary block diagram depicting functional modules of the controller of the system.
FIG. 3 illustrates exemplary steps involved in a method for power supply management in a vehicle equipped with a TRU.
FIG. 4 illustrates an exemplary view of a display associated with a human-machine interface associated with the TRU.
FIGS. 5A and 5B illustrate plots depicting electrical power consumption of the TRU for different cooling capacities or different compressor speeds.

### DETAILED DESCRIPTION

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the specification, the components of this invention described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components.

Transport refrigeration units (TRUs), commonly known as reefer units, are essential allowing for the safe and efficient transport of perishable goods over long distances on a vehicle. These units may be powered by a traction battery associated with the vehicle on which the TRU is installed to supply the power needed for running the TRU. Further, the battery of the vehicle may be connected to an external power source such as a grid to charge the battery or directly power the TRU. An important aspect of these systems is ensuring a consistent and reliable power supply, not only for the refrigeration process in the TRU but also for the vehicle especially when the battery is the main traction battery of the vehicle, so that autonomy of the vehicle is not loss or affected.

Existing solutions attempting to address these inefficiencies have primarily focused on refrigeration unit's operation and performance. However, these solutions have not fully addressed the issue of autonomy of the vehicle, particularly regarding drawing the battery of the vehicle down to zero charge or overload on the battery. Moreover, the inability to simultaneously run the refrigeration unit and the vehicle on a standard grid without compromising the autonomy of the vehicle when users cannot access a charging station (with the right level of power) represents a significant gap in the optimization of the vehicle and TRU operation.

At least embodiments of the present invention overcome the above-mentioned shortcomings and limitations associated with the existing electric reefer units/TRUs and associated power supply management, by providing an improved, cost-effective, and efficient solution that optimizes the electrical power use in vehicles where the TRU being installed on the vehicle is powered by a traction battery of the vehicle, ensuring that the energy available in the vehicle's battery is effectively and efficiently utilized for TRU operation without compromising the operation and autonomy of the vehicle.

The TRU of the present invention may be installed on a container or trailer associated with a vehicle. The TRU may be configured to maintain a conditioned environment in an enclosed (storage or conservation) space within the container/trailer. Various products including but not limited to pharmaceutical and nutraceutical products, and perishable items such as foods and beverages, and the like may be stored and transported in the container/trailer. The TRU may maintain the environment of the storage space at a specific or user-defined temperature and/or humidity, based on the stored products, to keep the stored products in a healthy condition while transporting and comply with product compliance regulations.

The TRU may be installed on the container/trailer associated with one or more vehicles including but not limited to an electric truck, a semi-electric truck, and a non-electric truck such that the TRU remains fluidically connected to the ambient and further remains fluidically connected to the storage space of the container/trailer. Accordingly, based on the environment to be maintained in the storage space or based on the products to be transported, the TRU may be operated to adjust its cooling capacity and supply conditioned air within the storage space.

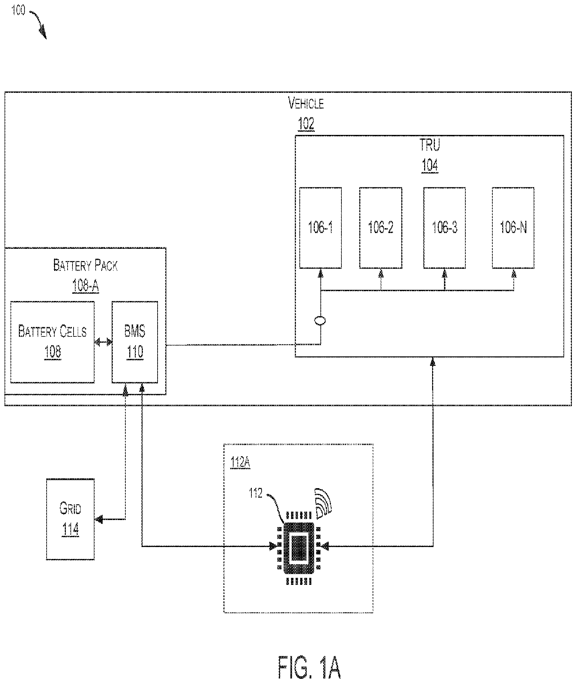

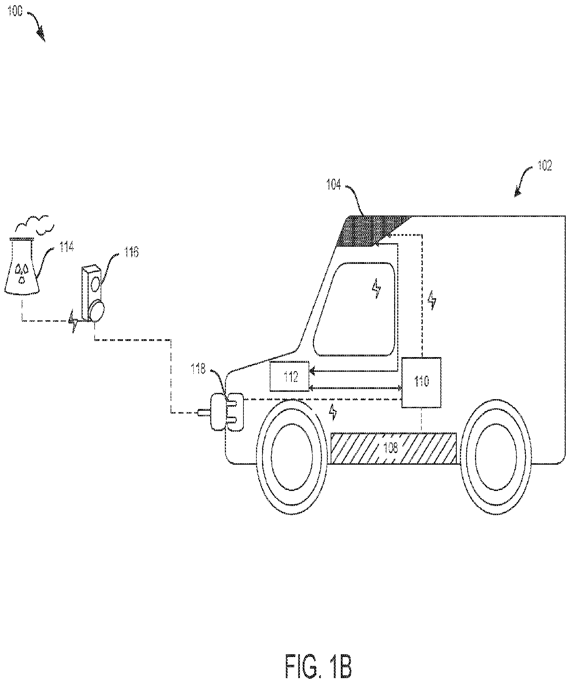

Referring to FIGs. 1A and 1B, a power supply management system 100 (referred to as a system 100, herein) for a vehicle 102 equipped with a TRU 104 and a battery 108 to power the TRU 104 is disclosed. The system 100 may include an on-board charger 118, the battery 108 having a battery management system (BMS) 110. In one or more embodiments, the system 100 may include an existing battery and BMS associated with the vehicle 102, where the battery 108 may be a traction battery of the vehicle 102, but is not limited to the like. However, in other embodiments, the battery 108 and BMS 110 may also be additionally installed on the vehicle 102 and further connected to the TRU 104. Further, the BMS 110 may be configured to enable the supply of electrical energy to the battery 108 and/or power the TRU 104 using the electrical energy stored in the battery 108.

In one or more embodiments, the battery 108 of the vehicle 102 may be configured to be connected to an external power source 114 such as but not limited to an electric grid, a battery station, or a battery associated with other vehicles via the BMS 110. An on-board charger or the BMS 110 of the vehicle may enable charging the battery 108 via the external power source 114 and/or directly supply electrical power from the external power source 114 to the TRU 104 while charging the battery 108 of the vehicle 102.

In one or more embodiments, the system 100 may include a controller 112 configured to be connected to an on-board charger 118 and one or more components 106-1 to 106-N (collectively designated as 106, herein) of the TRU 104. In one or more embodiments, the controller 112 may be a control unit of the vehicle 102, where the control unit may be in communication with a TRU controller. However, in other embodiments, the system 100 may involve a single controller 112 that may be connected to the battery 108 other components of the vehicle 102 as well as the TRU 104.

In one or more embodiments, the controller 112 may be in the form of a device 112A that may be retrofitted to existing TRUs 104, by connecting the controller 112/device 112A to the battery 108 and the TRU 104.

In one or more embodiments, the controller 112 may be in communication with a CANBUS system associated with the vehicle, enabling the retrieval of live CAN bus data from the vehicle 102 for real-time monitoring and optimization of vehicle and battery's performance. The CANBUS system may capture one or more parameters including but not limited to the battery's state of charge (SoC), power consumption and supply, charging mode and type, and temperature readings, including battery and ambient temperatures.

By understanding the type of recharge being used and the level of power supplied, the system 100 or controller 112 may adapt the operation of the TRU 104 to match the optimal power levels, ensuring there is no loss in the state of charge in th3 battery 108. This preservation of the vehicle's autonomy may help maintain efficiency and prolonging the battery's lifespan. Accordingly, the system 100 may reduce the consumption of the TRU 104 when it is detected that the power of the charger used to recharge the vehicle's batteries is too low to cover both the charging of the vehicle's battery 108 and the power consumption of the TRU 104. The TRU's consumption may be reduced to different levels, down to the very minimum power consumption, ensuring that the available power is optimally utilized and that the vehicle's 102 overall efficiency is maintained.

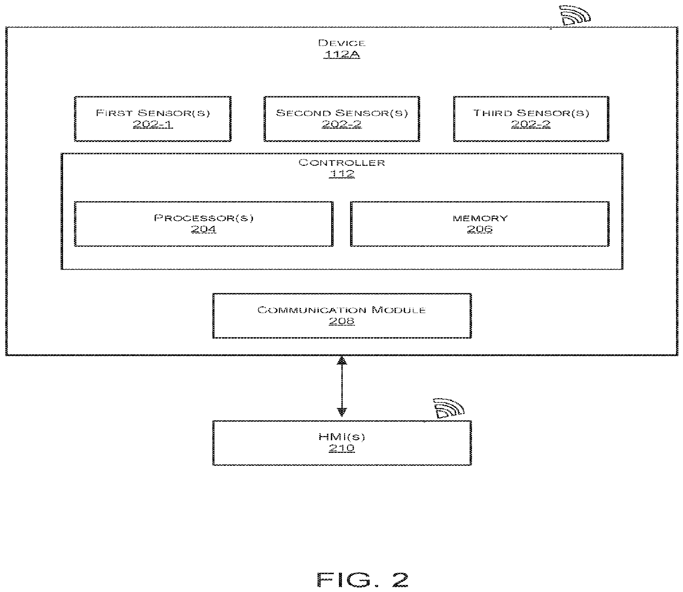

Referring to FIG. 2, in some embodiments, the device 112A may further include a first set of sensors 202-1 102-1to monitor a real-time SOC of the battery 108 or the amount of energy available in the battery 108. Further, the device 112A may include a second set of sensors 202-2 to monitor the real-time electrical power consumption of the TRU 104 or cooling capacity of the TRU 104 in real-time. In addition, the device 112A may include a third set of sensors 202-3 to monitor electrical attributes of electrical power being supplied by an external power source 114 to the battery 108 during one or more charging modes. In one or more embodiments, these sensors 202-1 to 202-3 (collectively designated as 202, herein) may include a current, a voltage sensor, a watt meter, an energy meter, and a frequency and phase meter, but are not limited to the like.

In one or more embodiments, the system 100 or device may include one or more human-machine interface (HMI) devices 210 in communication with the controller 112. The controller 112 may allow one or more registered users to monitor one or more of the real-time electrical power consumptions of the TRU 104 or cooling capacity of the TRU 104, the state of charge (SOC) or electrical power stored or available in the battery 108, and the electrical attributes of the electrical power supplied by the external power source 114 to the battery 108, but not limited to the like.

In addition, the HMI devices 210 may allow the registered users to adjust the cooling capacity of the TRU 104 or the electrical power allocated to the TRU 104 to maintain the predefined SOC in the battery 108.

In one or more embodiments, the HMI device 210 may be installed in a cabin of the vehicle 102 and/or within the container/trailer. Further, in some embodiments, the HMI device 210 may also be mobile phones or other portable computing devices associated with the users but is not limited to the like.

The controller 112 may be in communication with the sensors 202, and the HMI devices 210 and further operatively connected to the BMS 110, the on-board charger 118, and the components 106 of the TRU 104. The controller 112 may comprise a processor 204 coupled to a memory 206 storing instructions executable by the processor 204, which when executed by the processor 204 causes the controller 112 to perform one or more designated operations. In one or more embodiments, the controller 112 may be configured to adapt the operation of the components 106 of the TRU 104 to adjust the electrical power consumption of the TRU 104 or electrical power allocated to the TRU 104 to a determined power level or adjust the cooling capacity of the TRU 104 to a predefined capacity, based on one or more of electrical attributes of electrical power supplied to the battery, real-time electrical power consumption of the TRU, and real-time SOC of the battery. This may help minimize the load on the battery 108 to maintain the SOC of the battery 108 equal to or above the predefined SOC while keeping the cooling capacity of the TRU 104 within a safe zone for the products stored in the storage space, thereby ensuring that the energy available in the vehicle 102's battery 108 is effectively and efficiently utilized for TRU 104 operation without compromising the operation and autonomy of the vehicle 102.

For instance, in one or more embodiments, the controller 112 may be configured to adapt the operation of a compressor 106-1 associated with the TRU 104 to adjust the electrical power consumption of the TRU 104 or electrical power allocated to the TRU 104 to the determined power level or cooling capacity of the TRU 104 to the predefined capacity. Further, in some embodiments, the controller 112 may be configured to adapt the operation of a fan 106-2 associated with the TRU 104 to adjust the electrical power consumption of the TRU 104 or electrical power allocated to the TRU 104 to the determined power level or cooling capacity of the TRU 104 to the predefined capacity. Further, in other embodiments, the controller 112 may be configured to adapt the operation of the compressor 106-1, the fan 106-2, and/or heater 106-3 associated with the TRU 104 to adjust the electrical power consumption of the TRU 104 or electrical power allocated to the TRU 104 to the determined power level or cooling capacity of the TRU 104 to the predefined capacity

In one or more embodiments, the controller 112 may be configured to monitor, using the first set of sensors 202-1, the real-time SOC of the battery 108 or energy available in the battery 108, and further monitor, using the second set of sensors 202-2, the real-time electrical power consumption or cooling capacity of the TRU 104 during a trip of a predefined duration. Accordingly, the controller 112 may adapt the operation of the components 106 of the TRU 104 based on the monitored real-time electrical power consumption of the TRU 104 and the real-time SOC of the battery 108, to adjust electrical power consumption by the TRU 104 to the determined power level or adjust cooling capacity of the TRU 104 to the predefined capacity, and correspondingly maintain the SOC of the battery 108 equal to or above the predefined SOC during the trip.

In one or more embodiments, upon detection of the real-time SOC of the battery 108 to be below the predefined SOC, the controller 112 may be configured to generate and transmit an alert signal to the HMI devices. This may alert the users to drive the vehicle 102 to a charging station where the user may connect the battery 108 of the vehicle 102 to the external power source 114 for charging the battery 108. In such a scenario, in one or more embodiments, the controller 112 may operate in a first charging operation mode in which the controller 112 may actuate one or more switches associated with the BMS 110 to enable the supply of electrical power from the external power source 114 to the battery 108. In addition, in some embodiments, the controller 112 may actuate the switches associated with the BMS 110 to enable the supply of electrical power from the external power source 114 to the battery 108 for charging the battery 108 while supplying electrical power to the TRU 104 to keep the TRU 104 running at the predefined or a lower cooling capacity, based on the charging capacity, charging rate, and/or power available at the charging station. Thus, the system 100 allows for the battery 108 to be charged through the external power source/grid 114, while concurrently providing electrical power to the TRU 104 for uninterrupted operation of the TRU 104. However, if the SOC of the battery 108 still goes or remains below the predefined SOC during the first charging mode, the controller 112 may lower or restrict the supply of electrical power to the TRU 104 in order to maintain the SOC of the battery 108 at least equal to the predefined SOC. Further, when the SOC of the battery 108 later goes above the predefined SOC during the first charging mode, the controller 112 may enable the supply of electrical power from the power source 114/grid 114 or the battery 108 to the TRU 104 without compromising on the cooling of the TRU 104.

In the first charging mode, the controller 112 may be configured to monitor, using the first set of sensors 202-1, the real-time SOC of the battery 108 or energy available in the battery 108, monitor, using the second set of sensors 202-2, real-time electrical power consumption of the TRU 104, and further monitor, using the third set of sensors 202-3, electrical attributes of electrical power supplied by the power source 114 to the battery 108. Accordingly, the controller 112 may adapt the operation of the components 106 of the TRU 104 based on the monitored electrical attributes, the real-time electrical power consumption of the TRU 104, and the real-time SOC of the battery 108, to adjust electrical power consumption by the TRU 104 to the determined power level or adjust cooling capacity of the TRU 104 to the predefined capacity, and correspondingly maintain the SOC of the battery 108 equal to or above the predefined SOC.

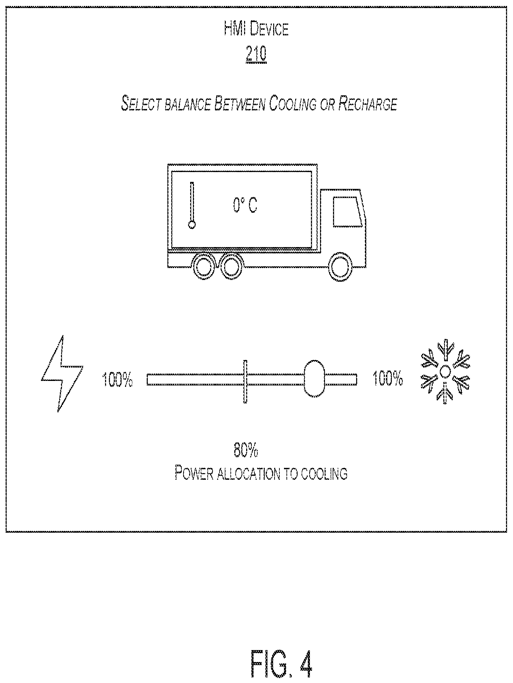

Referring to FIG. 4, an exemplary view of a display associated with the HMI device 210 is disclosed. As illustrated, the HMI device 210 may provide an interactive way of allowing the users to select a balance between the cooling capacity of the TRU 104 and the recharging of the battery 108. Here the right half of the selection slider/bar may represent preference to allocating power for the TRU 104 and the left half of the selection slider/bar may represent preference to allocating power for recharging the battery 108. For instance, if the slider/bar is selected at 80% on the right half, 80% of the battery 108 power may be allocated to TRU 104 for cooling operation, thereby saving the remaining power of the battery 108.

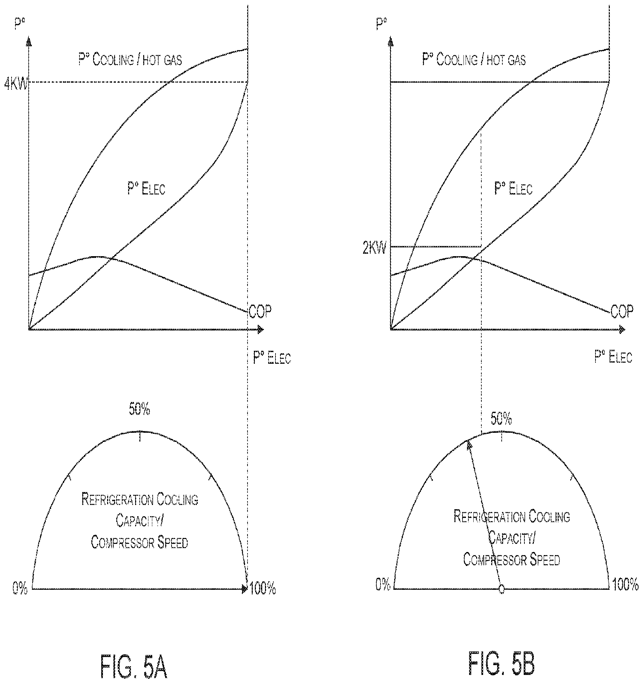

FIGs. 5A and 5B illustrate plots depicting electrical power consumption of the TRU 104 for different cooling capacities or different compressor speeds. In a non-limiting example, for a 100% compressor speed, the electrical power consumption of the TRU 104 may be 4 KW as shown in FIG. 5A. However, for a 40% compressor speed, the electrical power consumption of the TRU 104 may drop to 2 KW. Accordingly, for different compressor speed, the electrical power consumption of the TRU may vary.

It is to be appreciated that the compressor speed and corresponding power consumption by the TRU mentioned above are only exemplary, and these can be changed to a higher number or a lower number without any limitation whatsoever, and all such implementations are well within the scope of the invention as set out in the appended claims. Further, while various embodiments and drawings have been described herein for adjusting compressor speed to adapt the power allocated to the TRU or the power consumption of the TRU, however, the operation of any other component of the TRU 104 may also adjusted for adjusting the power allocated to the TRU or the power consumption of the TRU without any limitations, and all such embodiments are well within the scope of the invention as set out in the appended claims.

In one or more embodiments, the switches associated with the BMS 110 may be internal power-electronic switches associated with a power conversion unit of the BMS 110. However, the switches may also be external switches configured in electrical lines and/or a charging adaptor connecting the BMS 110 to the power source/grid 114, the TRU 104, and the battery 108.

In one or more embodiments, referring to FIG. 2, the device 112A or controller 112 may include a communication module 208 that may enable the device or controller 112 to establish a secured communication with the sensors 202, the BMS 110, the HMI device 210, and various other components 106 associated with the TRU 104 as well as the vehicle 102. The communication module 208 may be wired media and/or wireless media. For instance, the communication module 208 may be a transceiver but not limited to the like, that may include but is not limited to, an antenna, an Ethernet port, a USB port, or any other port that can be configured to receive and transmit location and attributes data.

Further, in one or more embodiments, the communication module 208 may include Ethernet modules, Wi-Fi modules, Bluetooth modules, Zigbee modules, GSM/GPRS modules, LoRa modules, 5G modules, RS-232/RS-485 serial communication modules, CAN (Controller 112 Area Network) modules, but not limited to the like.

Referring to FIGs. 1A and 1B, in one or more embodiments, the battery 108 and the BMS 110 may be packaged as a battery pack 108A as shown in FIG. 1A, which may be secured in the vehicle 102. The battery pack 108A may include one or more battery 108 cell modules (also referred to as battery 108 cells, herein), and a power conversion unit (PCU) to convert electrical power received and/or supplied by the battery 108 in a range suitable for the battery 108 cells, the TRU 104, and the grid 114 (external power sources). The battery pack 108A may further include one or more interfaces to facilitate the connection of the battery pack 108A with the TRU 104, the controller 112, and the grid 114. In one or more embodiments, the PCU within the battery pack 108A or BMS 110 may facilitate managing and converting electrical power to ensure optimal performance, efficiency, and compatibility with connected loads (TRU 104) or charging sources (external power source 114). The PCU may include one or more rectifiers, one or more inverters, and/or one or more DC-DC converters. The rectifier(s) may be configured to convert the AC power supplied by the external power sources into DC power for the battery 108 cells. Further, the inverters may be configured to convert the DC power level output by the battery 108 cells into AC power for the AC power-based components 106 of the TRU 104 during the charging operation mode or power supply mode and/or to the grid 114 during the power export mode. Furthermore, the DC-DC converter may be configured to adjust the DC power level output by the battery 108 cells.

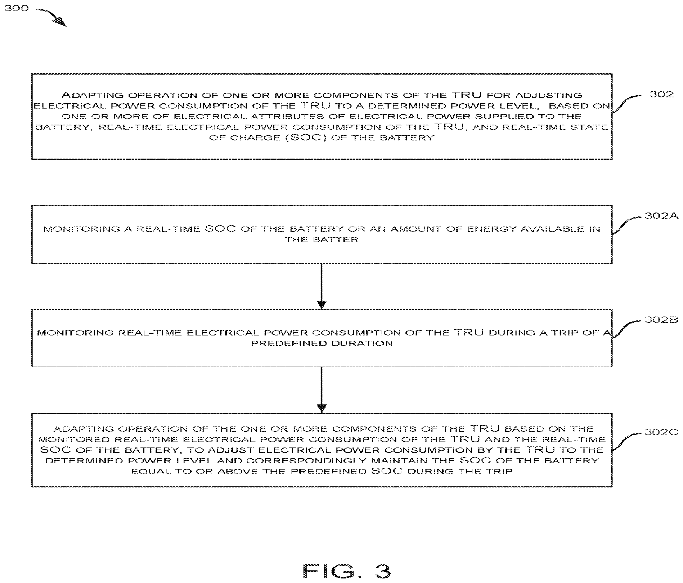

Referring to FIG. 3, method 300 for power supply management in a vehicle equipped with a TRU and a battery to power the TRU is disclosed. Method 300 may involve the battery 108, the BMS 110, the controller 112 or device 112A, and other components associated with the system of FIGs. 1A to 2. Method 300 may include step 302 of adapting, by the controller, operation of the one or more components of the TRU for adjusting the electrical power consumption of the TRU or electrical power allocated to the TRU to a determined power level or cooling capacity of the TRU to a predefined capacity based on one or more of electrical attributes of electrical power supplied to the battery, real-time electrical power consumption of the TRU, and real-time SOC of the battery. The device or sensors may facilitate the controller in monitoring the real-time electrical power consumption or cooling capacity of the TRU and the real-time SOC or electrical power available in the battery. For instance, in one or more embodiments, at step 302, method 300 may include adapting the operation of one of a compressor, a fan, and/or a heater associated with the TRU for adjusting electrical power consumption of the TRU or electrical power allocated to the TRU to the determined level or adjusting cooling capacity of the TRU to the predefined capacity.

In one or more embodiments, method 300 may include steps 302A of monitoring a real-time SOC of the battery or an amount of energy available in the battery, followed by another step 302B of monitoring a real-time electrical power consumption of the TRU during a trip of a predefined duration. Method may further include step 302C of adapting the operation of the one or more components of the TRU based on the real-time electrical power consumption of the TRU and the real-time SOC of the battery being monitored at steps 302A, 302B, to adjust electrical power consumption by the TRU to the determined power level or adjust cooling capacity of the TRU to the predefined capacity, and correspondingly maintain the SOC of the battery equal to or above the predefined SOC during the trip.

In one or more embodiments, the battery of the vehicle may be configured to be connected to an external power source such as an electric grid. In a first charging mode, method 300 may include the steps of monitoring the real-time SOC of the battery or the amount of energy available in the battery, monitoring the real-time electrical power consumption of the TRU, and monitoring electrical attributes of electrical power supplied by the power source to the battery during one or more charging modes. Accordingly, method 300 may include the step of adapting the operation of the components of the TRU based on the monitored electrical attributes, the real-time electrical power consumption of the TRU, and the real-time SOC of the battery, to adjust electrical power consumption by the TRU to the determined power level or adjust cooling capacity of the TRU to the predefined capacity, and correspondingly maintain the SOC of the battery equal to or above the predefined SOC, based on one or more of electrical attributes of electrical power supplied to the battery, real-time electrical power consumption of the TRU, and real-time SOC of the battery. Further, in some embodiments, in the first charging mode, method 300 may include the steps of enabling the supply of electrical power from the external power source to the battery for charging the battery while supplying electrical power to the TRU to keep the TRU running at the predefined or a lower cooling capacity, based on the charging capacity, charging rate, and/or power available at the charging station.

In one or more embodiments, method 300 may include steps of displaying, on a HMI device associated with users, one or more of the real-time SOC of the battery, the real-time electrical power consumption or the cooling capacity of the TRU, and the electrical attributes of electrical power supplied by the power source during the one or more charging modes. This may allow the users to adjust the cooling capacity of the TRU, the electrical power consumption of the TRU or the electrical power allocated to the TRU using the HMI devices, based on the monitored/displayed data. Further, method 300 may further include the steps of generating and transmitting an alert signal to the mobile devices when the real-time SOC of the battery goes below the predefined SOC. This may allow the users to adjust the cooling capacity of the TRU and further connect the battery to the external power source to charge the battery in any of the first or second charging modes.

Thus, embodiments of the invention (system, and method) overcome the shortcomings and limitations associated with the existing electric reefer units/TRUs and associated power supply management, by providing an improved, cost-effective, and efficient solution that optimizes the electrical power use in vehicles where the TRU being installed on the vehicle is powered by the traction battery of the vehicle, ensuring that the energy available in the vehicle's battery is effectively and efficiently utilized for TRU operation without compromising the operation and autonomy of the vehicle.

The term "real-time" herein refers to the processing of data or the execution of an operation that occurs simultaneously or nearly simultaneously with the event or data acquisition, allowing immediate feedback or action. In the context of the present invention, real-time implies that the system or controller can respond to inputs or changes in conditions without perceptible delay, typically within a timeframe determined by the system's requirements.

While the invention has been described with reference to exemplary embodiments, it will be understood by those skilled in the art that various changes may be made and equivalents may be substituted for elements thereof without departing from the scope of the invention as defined by the appended claims. Modifications may be made to adopt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A system (100) for power supply management in a vehicle (102) equipped with a transport refrigeration unit, TRU, (104) and a battery (108) to power the TRU, the system comprising:
a controller (112) connected to the TRU, wherein the controller comprises a processor (204) with access to a memory (206) storing instructions executable by the processor, which causes the controller to adapt operation of one or more components (106) of the TRU to adjust electrical power consumption of the TRU to a determined power level, based on one or more of electrical attributes of electrical power supplied to the battery, real-time electrical power consumption of the TRU, and real-time state of charge, SOC, of the battery.

2. The system (100) of claim 1, wherein the battery (108) is a traction battery associated with the vehicle (102).

3. The system (100) of any preceding claim, wherein the controller (112) is a control unit of the vehicle (102), and wherein the control unit is in communication with a TRU controller.

4. The system (100) of any preceding claim, wherein the controller (112) is further configured to adjust cooling capacity of the TRU (104) to adjust the electrical power consumption of the TRU.

5. The system (100) of any preceding claim, wherein the controller (112) is further configured to adapt the operation of one of: a compressor (106-1), a fan (106-2), or a heater (106-3) of the TRU (104) to adjust the electrical power consumption of the TRU.

6. The system (100) of any preceding claim, wherein the controller (112) is further configured to:
monitor, using a first set of sensors (202-1), the real-time SOC of the battery (108) or an amount of energy available in the battery;
monitor, using a second set of sensors (202-2), the real-time electrical power consumption of the TRU (104) during a trip of a predefined duration; and
adapt the operation of the one or more components (106) of the TRU based on the monitored real-time electrical power consumption of the TRU and the real-time SOC of the battery, to adjust the electrical power consumption of the TRU to the determined power level or adjust the cooling capacity of the TRU to a predefined capacity, and correspondingly maintain the SOC of the battery equal to or above a predefined SOC during the trip,
optionally, wherein upon detection of the real-time SOC of the battery to be below the predefined SOC, the controller is configured to generate and transmit an alert signal to one or more human-machine interface, HMI, devices (210) associated with one or more users.

7. The system (100) of any of claims 1 to 5, wherein the battery (108) is configured to be connected to an external power source (114), and wherein the controller (112) is further configured to:
monitor, using a first set of sensors (202-1), the real-time SOC of the battery or an amount of energy available in the battery;
monitor, using a second set of sensors (202-2), the real-time electrical power consumption of the TRU (104);
monitor, using a third set of sensors (202-3), the electrical attributes of electrical power supplied by a power source to the battery during one or more charging modes; and
adapt the operation of the one or more components (106) of the TRU based on the monitored electrical attributes, the real-time electrical power consumption of the TRU, and the real-time SOC of the battery, to adjust the electrical power consumption of the TRU to the determined power level or adjust cooling capacity of the TRU to a predefined capacity.

8. The system (100) of claim 7, wherein the controller (112) is in communication with one or more human-machine interface, HMI, devices (210) associated with one or more users,
wherein the controller is further configured to display one or more of the real-time SOC of the battery (108), the real-time electrical power consumption or the cooling capacity of the TRU (104), the electrical attributes of electrical power supplied by the power source (114) during the one or more charging modes, on the one or more HMI devices (210),
optionally, wherein the controller is further configured to enable the one or more users to adjust, using the one or more HMI devices (210), the cooling capacity of the TRU or the electrical power consumption of the TRU.

9. A method for power supply management in a vehicle (102) equipped with a transport refrigeration unit, TRU, (104) and a battery (108) to power the TRU, the method comprising:
adapting, by a controller (112), operation of one or more components (106) of the TRU for adjusting electrical power consumption of the TRU to a determined power level, based on one or more of electrical attributes of electrical power supplied to the battery, real-time electrical power consumption of the TRU, and real-time state of charge, SOC, of the battery.

10. The method of claim 9, wherein the method further comprises adjusting cooling capacity of the TRU (104) to adjust the electrical power consumption of the TRU,
and/or, wherein the method further comprises:
adapting, by the controller (112), operation of one of: a compressor (106-1), a fan (106-2), or a heater (106-3) associated with the TRU for adjusting the electrical power consumption of the TRU.

11. The method of any of claims 9 or 10, wherein the method further comprises:
monitoring the real-time SOC of the battery (108) or an amount of energy available in the battery;
monitoring the real-time electrical power consumption of the TRU (104) during a trip of a predefined duration; and
adapting the operation of the one or more components (106) of the TRU based on the monitored real-time electrical power consumption of the TRU and the real-time SOC of the battery, to adjust the electrical power consumption by the TRU to the determined power level or adjust cooling capacity of the TRU to a predefined capacity, and correspondingly maintain the SOC of the battery equal to or above a predefined SOC during the trip.

12. The method of any of claims 9 or 10, wherein the battery (108) is configured to be connected to an external power source (114), and wherein the method further comprises:
monitoring the real-time SOC of the battery or an amount of energy available in the battery;
monitoring the real-time electrical power consumption of the TRU (104);
monitoring the electrical attributes of electrical power supplied by a power source to the battery during one or more charging modes; and
adapting the operation of the one or more components (106) of the TRU based on the monitored electrical attributes, the real-time electrical power consumption of the TRU, and the real-time SOC of the battery, to adjust the electrical power consumption of the TRU to the determined power level or adjust cooling capacity of the TRU to a predefined capacity.

13. The method of claim 12, wherein the method further comprises:
displaying, on a human-machine interface, HMI, device (210) associated with one or more users, one or more of the real-time SOC of the battery (108), the real-time electrical power consumption or the cooling capacity of the TRU (104), and the electrical attributes of electrical power supplied by the power source (114) during the one or more charging modes.

14. The method of claim 13, wherein the method further comprises:
allowing, by the controller (112), the one or more users to adjust the cooling capacity of the TRU (104) or the electrical power consumption of the TRU using the HMI device (210),
and/or, wherein the method further comprises:
generating and transmiting an alert signal to one or more HMI devices (210) when the real-time SOC of the battery (108) goes below the predefined SOC.

15. The method of any of claims 9 to 14, wherein the controller (112) is a control unit of the vehicle (102), and wherein the control unit is in communication with the TRU controller.
